# EUROPÄISCHE PATENTSCHRIFT

(11) **EP 0 647 578 B1**
(45) Veröffentlichungstag und Bekanntmachung des Hinweises auf die Patenterteilung: **03.09.1997**
(21) Anmeldenummer: 94112459.6
(22) Anmeldetag: 10.08.1994
(51) Int. Cl.: B65G 47/84, B65G 27/00

(54) **Förderkarussell mit mehreren Ausläufern zum selektiven Festhalten zu fördernder Behälter**
Rotary conveyor with multiple outlets which selectively retains the conveyed containers
Convoyeur du type caroussel, avec plusiers sorties, qui retient sélectivement les récipients à transporter

(30) Priorität: 07.10.1993 CH 3017/93; 08.11.1993 CH 3355/93
(43) Veröffentlichungstag der Anmeldung: 12.04.1995
(73) Patentinhaber: ELPATRONIC AG, CH-6303 Zug (CH)
(72) Erfinder: Bertschi, Peter, CH-8902 Urdorf (CH); Gysi, Peter, CH-5454 Bellikon (CH)

(56) Entgegenhaltungen:
- EP-A- 0 366 225
- DE-A- 2 820 315
- DE-A- 3 040 096
- DE-A- 3 741 257
- US-A- 2 612 254

## Beschreibung

Die Erfindung betrifft ein Förderkarussell mit mehreren Ausläufen zum selektiven Festhalten zu fördernder Behälter gemäss Oberbegriff des Anspruchs 1 und des Anspruchs 2. Ferner betrifft die Erfindung eine Inspektionseinrichtung zum Prüfen von Flaschen mit einem solchen Förderkarussell.

Aus der DE-C-1 167 210 und der DE-A-28 20 315 sind Förderkarussels gemäss Oberbegriff der Ansprüche 1 und 2 bekannt. Bei den bekannten Karussels müssen bei einem Wechsel des Behälterformates die Halteelemente gewechselt werden, was sehr zeitaufwendig ist.

Aus der DE-A 38 38 007 ist ein Sortierstern für Gefässbehandlungsmaschinen bekannt. Bei diesem werden die einzelnen Behälter in den Taschen des Sortiersterns bzw. Karussells durch Drehriegel gehalten, welche eine Drehbewegung in einer Ebene parallel zur Karussellachse ausführen. Bei dieser bekannten Art die Behälter im Karussell zu halten, ist beim Wechsel des Flaschenformates, z.B. von 1,5 Liter auf 0,5 Liter, jeweils das gesamte Karussell mit vielen Teilen zu wechseln. Ferner besteht die Möglichkeit, dass der drehende Riegel auf der Behälteroberfläche Kratzer oder sonstige Beschädigungen erzeugt.

Der Erfindung liegt deshalb die Aufgabe zugrunde, eine Möglichkeit zu schaffen, die Behälter auf dem Karussell festzuhalten, bei welcher diese Nachteile nicht auftreten.

Dies wird bei einem Förderkarussell der eingangs genannten Art durch die kennzeichnenden Merkmale des Anspruchs 1 bzw. des Anspruchs 2 erzielt.

Dadurch, dass das Halteelement eine Bewegung ausführt, die im wesentlichen in der Ebene einer Karussellscheibe erfolgt, also in einer Ebene senkrecht zur Karusselachse, ergibt sich die Möglichkeit, dass bei einem Formatwechsel nur der vorderste Teil des Halteelementes ausgewechselt werden muss. Ferner ergibt sich dadurch die Möglichkeit, dass das Halteelement seine Bewegung bis zum Haltepunkt völlig frei vom Behälter ausführt und diesen erst beim Erreichen des Haltepunktes berührt, was die Beschädigung der Behälter sicher ausschliesst. Vorzugsweise erfolgt das Halten auch so, dass das Halteelement den Behälter beim Festhalten im wesentlichen nur an einer Stelle berührt.

Nachfolgend werden Ausführungsbeispiele der Erfindung anhand der Figuren näher erläutert. Dabei zeigt
Figur 1 schematisch eine Ansicht von oben einer Flascheninspektionsmaschine mit drei Flaschenausläufen;
Figur 2 ebenfalls schematisch von oben und nur teilweise dargestellt ein Karussell als Sortiereinrichtung;
Figur 3 einen Vertikalschnitt durch ein Karussell einerseits für 1,5 Liter-Flaschen und andererseits für 0,5 Liter-Flaschen;
Figur 4 eine Draufsicht auf die Steuerungsebene des Karussells;
Figur 5 eine Ansicht einer ersten Ausführungsform des Halteelementes;
Figur 6 die Ausführungsform gemäss Figur 5 angepasst für kleinere Behälter;
Figur 7 eine weitere Ausführungsform des Halteelementes;
Figur 8 eine weitere Ausführungsform des Halteelementes;
Figur 9 ebenfalls eine Ausführungsform des Halteelementes;
Figur 10 die Ausführungsform des Halteelementes gemäss Figur 9 für kleine Flaschen;
Figur 11 eine Ansicht des Karussells, worin die beiden Ausführungsformen gemäss Figur 9 und 10 dargestellt sind; und
Figur 12 eine Ansicht des Karussells, worin die Ausführungsformen gemäss den Figuren 5 und 6 dargestellt sind.

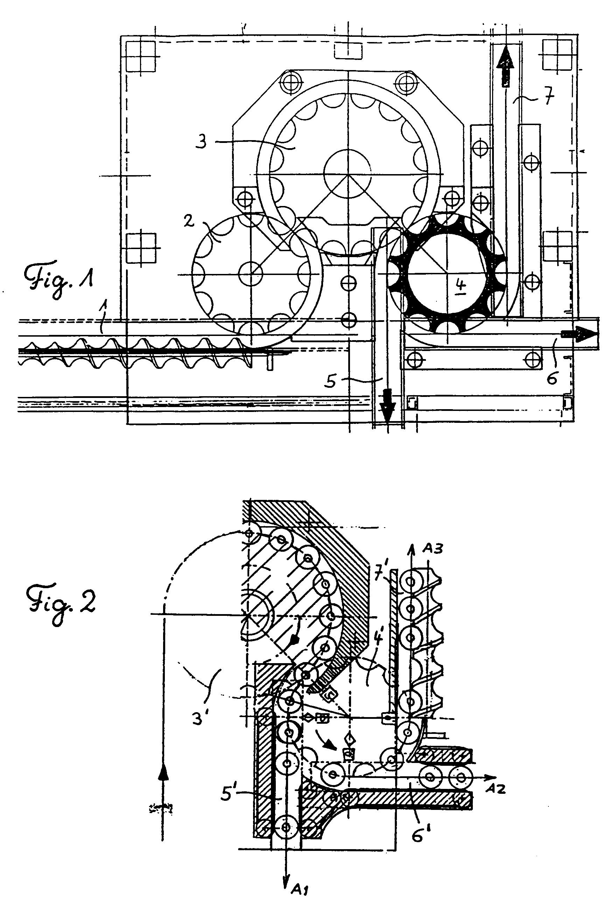

In Figur 1 ist als Beispiel eine Inspektionsmaschine für Flaschen, z.B. für Mehrweg-PET-Flaschen dargestellt. Die Flaschen gelangen über einen Einlauf 1 auf ein Einlaufkarussell 2, ein Hauptkarussell 3 und auf das Auslaufkarussell 4. Während des Einlaufens und auf dem Hautpkarussell werden die Flaschen verschiedenen Inspektionsschritten unterworfen, welche an sich bekannt sind. So wird z.B. die Höhe der Flaschen, das Vorhandensein eines Verschlusses, das Vorhandensein von Restwasser, das Vorhandensein von Fremdkörpern usw. geprüft. Mittels des Auslaufkarussells 4 werden dann die Flaschen stehend auf drei verschiedene Ausläufe 5,6,7 verteilt. Dabei können z.B. die Ausläufe 5 und 6 für solche Flaschen vorgesehen sein, welche die Inspektionen nicht bestanden haben und der Auslauf 7 für fehlerfreie Flaschen, welche der erneuten Befüllung zugeführt werden. Damit die Flaschen im Auslaufkarussell 4 bis zu dem ihnen zugehörigen Auslauf im Karussell gehalten werden können, sind die nachfolgend beschriebenen Halteelemente am Auslaufkarussell 4 vorgesehen.

Figur 2 zeigt eine weitere Anordnung, welche zum Prüfen und/oder zum Sortieren von Flaschen vorgesehen sein kann. Auch hier ist ein Hauptkarussell 3' vorgesehen, welches ein Auslaufkarussell 4' beschickt. Von diesem weg gehen wiederum Ausläufe 5', 6' und, mittels einer Schnecke, 7'. Auch beim Verteilkarussell 4' müssen entsprechende Halteelemente vorgesehen werden, welche die Flasche bis zu dem ihr bestimmten Auslauf im Karussell halten und bei dem ihr bestimmten Auslauf loslassen.

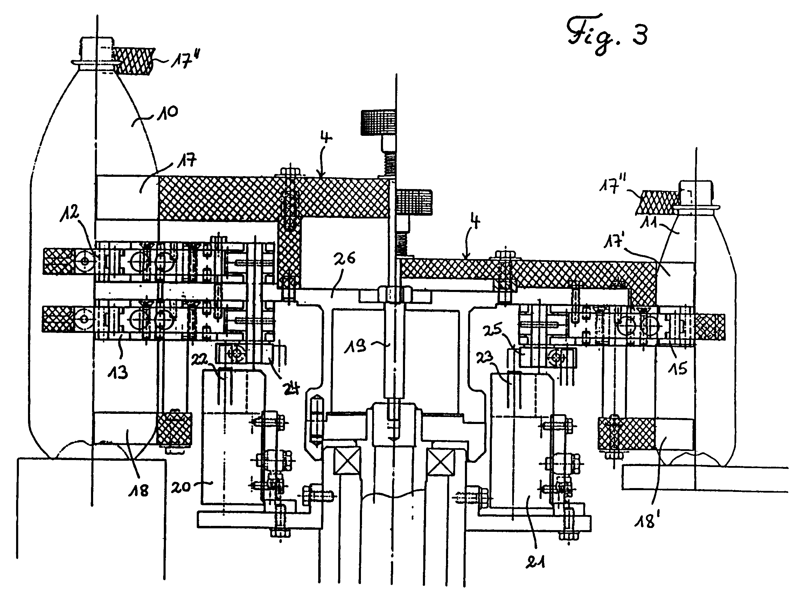

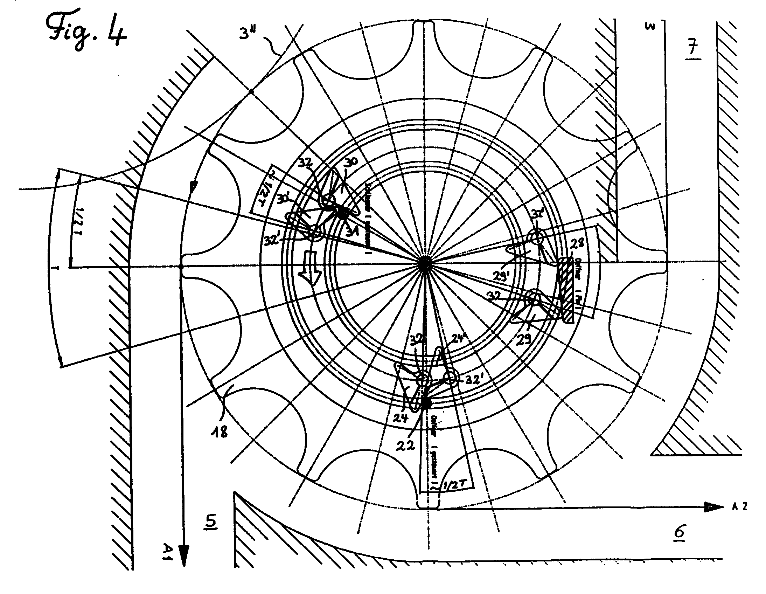

Figur 3 zeigt nun einen Vertikalschnitt durch ein Auslaufkarussell 4, wobei auf der linken Hälfte der Figur das Auslaufkarussell so dargestellt ist, dass es für grosse Flaschen 10, z.B. 1,5 Liter-Flaschen eingestellt ist und auf der rechten Seite so dargestellt ist, dass es dort für kleine Flaschen 11, z.B. 0,5 Liter-Flaschen, eingestellt ist. Entsprechend kann das Karussell einerseits mit zwei Halteelementen 12, 13 für grosse Flaschen bestückt sein und andererseits mit nur einem Halteelement 15 für kleine Flaschen. Oberhalb und Unterhalb der Halteelemente sind die die Karussell-Taschen bildenden Aufnehmer (Fördersterne) 17 und 18 bzw. 17' und 18' vorgesehen, welche um die zentrale Achse 19 des Karussells umlaufen. Die Aufnehmer 17 bis 18' sind dabei auswechselbar und in der Höhe einstellbar, um die Anpassung an verschiedene Flaschengrössen zu ermöglichen. Anstelle des auswechselbaren, flaschenformatabhängigen oberen Fördersternes 17, 17' kann auch ein am Flaschenkragen angreifender höhenverstellbarer Förderstern 17'' (nur teilweise dargestellt) vorgesehen sein, der damit formatunabhängig ist und nicht ausgewechselt werden muss. Unterhalb der Halteelemente 13 bzw. 15 sind maschinenfest, d.h. nicht mit dem Karussell umlaufend, Steuerungselemente 20 bzw. 21 vorgesehen, welche die Halteelemente steuern, was nachfolgend noch näher erläutert wird. Zu dieser Steuerung weisen die Steuerelemente 20,21 elektromagnetisch oder pneumatisch nach oben ausfahrbare Steuerbolzen 22 bzw. 23 auf, welche an Steuerflügeln 24 bzw. 25 zur Steuerung der Halteelemente in Eingriff bringbar sind. Dabei erfahren die an der Karussellscheibe 26 drehbar gelagerten Steuerflügel 24 bzw. 25 eine Drehbewegung, wenn sie durch die Karusselldrehung an den ausgefahrenen Bolzen 22,23 der Steuereinrichtungen vorbeigefahren werden. Dies ist in Draufsicht in Figur 4 dargestellt, wo drei der insgesamt 12 Steuerflügel in jeweils zwei verschiedenen Stellungen gezeigt sind. So ist vor dem Auslauf 6 der Steuerflügel 24 gezeigt, welcher durch den steuerbaren Bolzen 22 von der einen Stellung in die mit 24' bezeichnete zweite Stellung bringbar ist. In der ersten, mit 24 bezeichneten Stellung ist der Steuerflügel 24 so positioniert, dass das zugehörige, noch zu beschreibende Kalteelement, den in der Karusselltasche befindlichen Gegenstand festhält. In der mit 24' bezeichneten Stellung des Steuerflügels ist das zugehörige Halteelement zurückgezogen, so dass es den Behälter nicht mehr festhält und dieser bei der Drehung des Karussells in den Auslauf 6 ausläuft. Durch den Steuerbolzen 22 kann also bestimmt werden, ob der Behälter in den Auslauf 6 gelangt oder nicht. Dasselbe ergibt sich für den Auslauf 5 mittels des Steuerflügels 30, der in seiner einen Position mit 30 bezeichnet ist und in seiner zweiten Position mit 30'. Dieser Steuerflügel wird durch den Bolzen 31 gesteuert. Ist dieser Bolzen nach oben gefahren, so ergibt sich dadurch eine Drehung des Steuerflügels von der Stellung 30 in die Stellung 30' und damit, wie nachfolgend noch beschrieben wird, ein Schliessen des Halteelements, welches somit den Behälter festhält. Die entlang der Kurve 3'' vom Hauptkarussell in das Auslaufkarussell einlaufenden Flaschen werden also, durch den Bolzen 31 gesteuert, entweder durch das Halteelement festgehalten, wodurch die Flasche mit dem Karussell am Auslauf 5 vorbeigeführt wird oder durch das Halteelement nicht festgehalten, wodurch die Flasche ohne weiteres in den Auslauf 5 gelangt. Diejenigen Flaschen, welche beim Einlaufen in das Auslaufkarussell durch den Steuerbolzen bzw. das Halteelement im Karussell gehalten worden sind und auch nicht durch den Steuerbolzen 22 bzw. das Halteelement losgelassen worden sind und somit in den Auslauf 6 ausgeleitet worden sind, gelangen zum Auslauf 7, vor welchem das Halteelement ebenfalls gelöst werden muss. Dies wird durch eine fixe Steuerkurve 28 bewirkt, welche jeweils die Steuerhebel so bewegt, dass sich das Halteelement öffnet. In der Figur 4 sind dazu die Steuerhebel 29 bzw. 29' dargestellt, an denen die von der Steuerkurve 28 bewirkte Schwenkbewegung, welche das Oeffnen des Halteelementes bewirkt, ersichtlich ist.

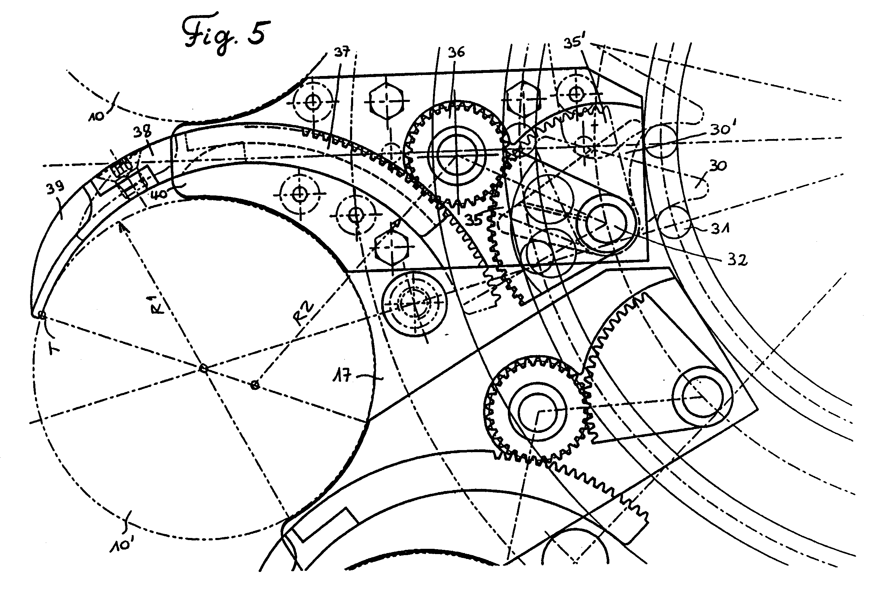

Mit Bezug auf Figur 5 wird nun eine erste Ausführungsform des von den Steuerhebeln betätigten Halteelementes beschrieben. In Figur 5 ist dabei strichliniert der Steuerhebel 30 dargestellt, welcher durch den Schliessbolzen 31 um die Achse 32 drehbar ist. Auf dieser Achse 32 ist ein Zahnradsegment 35 gehalten, welches in seiner einen Stellung als 35 und in seiner anderen Stellung als 35' bezeichnet ist. Der Stellung 35 entspricht dabei das Schliessen des Halteelementes durch den Bolzen 31. Ueber ein im Zahnradsegment 35 kämmendes Zahnrad 36 wird das eigentliche bogenförmige Halteelement 38 betätigt, welches in seinem hinteren Bereich mit einer Verzahnung 37 versehen ist, welche in der Verzahnung des Zahnrads 36 kämmt. An seinem vorderen Ende ist das Halteelement 38 mit einem auswechselbaren Haltefinger 39 versehen. Wie aus der Figur ersichtlich ist, wird das Halteelement 38 aus seiner eingezogenen Stellung zwischen den aufeinanderfolgenden Flaschen 10, 10' über die Vorderkante 40 des Karussell-Sterns in der Ebene der Karussellscheibe, d.h. in der Ebene senkrecht zur Karussellachse nach vorne kreisbogenförmig ausgefahren, wenn der Schliesserbolzen 31 nach oben ragt und beim Vorbeifahren des Steuerhebels 30 diesen in die Stellung 30' dreht. Dann ergibt sich die Drehung des Zahnradsegmentes aus der Stellung 35' in die Stellung 35 und dadurch das Ausfahren des Halteelementes, welches dann mit seinem Finger 39 die Flasche 10' am Punkt T berührt und diese in der Tasche des Karussells hält. Durch den Bolzen 31 gesteuert, der von einer Steuerschaltung, die von den Ergebnissen der Flascheninspektion abhängig den Bolzen 31 ausfährt oder nicht, wird also bestimmt, ob die Flasche 10' durch das Halteelement 38 im Karussell festgehalten wird oder nicht. Ist dies der Fall, so gelangt die dargestellte Flasche 10' mindestens bis zum nächsten Auslauf 6' und gerät nicht in den Auslauf 5.

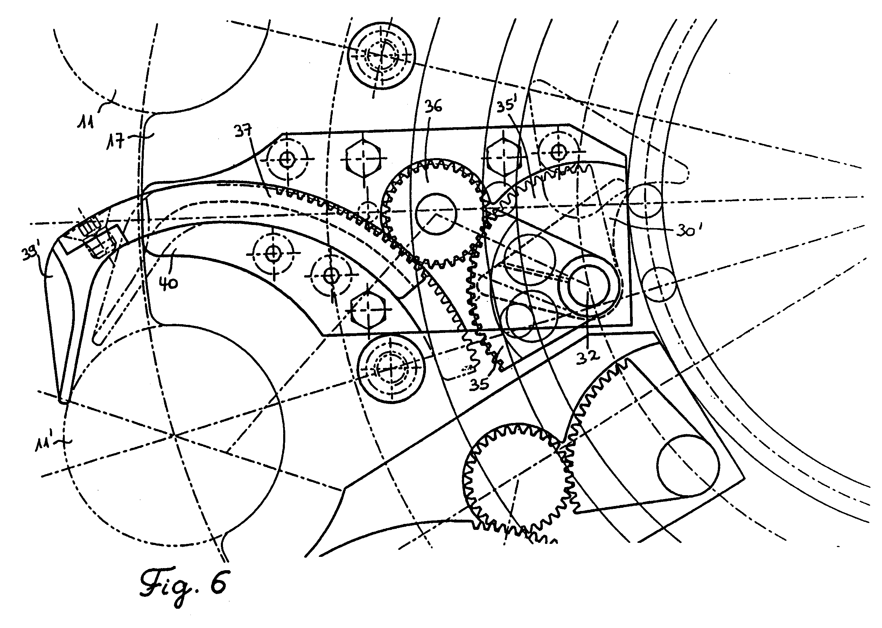

Figur 6 zeigt dieselbe Anordnung des Halteelementes 38, wobei gleiche Bezugszeichen wie in der Figur 5 gleiche Teile bezeichnen. Es ist hier aber ersichtlich, dass das Halteelement mit einem geänderten Finger 39' versehen ist. Dies erlaubt das Halten kleinerer Flaschen 11 bzw. 11'. Es ist also ersichtlich, dass bei der erfindungsgemässen Haltevorrichtung, welche in einer Ebene des Karussells ausfährt, nur durch das Aendern des Vorderteils 39' die Anpassung auf die kleinen Flaschengrössen erfolgen kann. Dies ist ein wesentlicher Vorteil der erfindungsgemässen Halteelemente. Auch bei der kleineren Flaschengrösse erfolgt das Halten der Flasche im wesentlichen nur an einem Punkt und beim Ausfahren des Halteelementes besteht genau wie bei demjenigen in Figur 5, keine Gefahr des Verkratzens der Flasche 10' bzw. 11'.

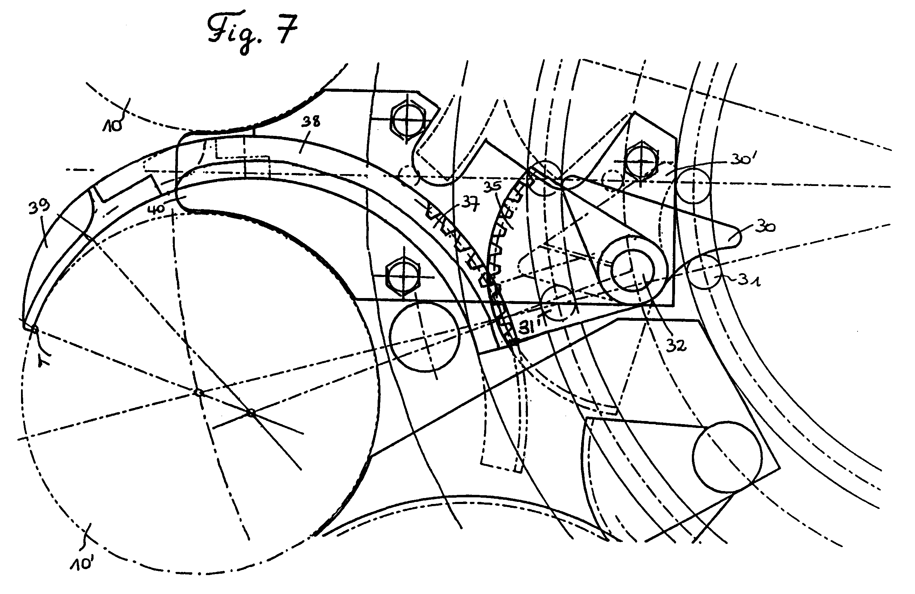

Figur 7 zeigt eine vereinfachte Ausführungsform des Haltelementes gemäss den Figuren 5 und 6. Dabei bezeichnen wiederum gleiche Bezugsziffern gleiche Elemente. Bei dieser Ausführungsform wird auf das Zahnrad 36 verzichtet. Es ergibt sich dadurch eine Bewegungsumkehr der Steuerkurve. Dementsprechend erfolgt nun das Ausfahren des Halteelementes mittels des Steuerbolzens 31', der auf der gegenüberliegenden Seite der Drehachse der Steuerkurve 30 angeordnet ist, wie der Steuerbolzen 31 gemäss den Figuren 5 und 6.

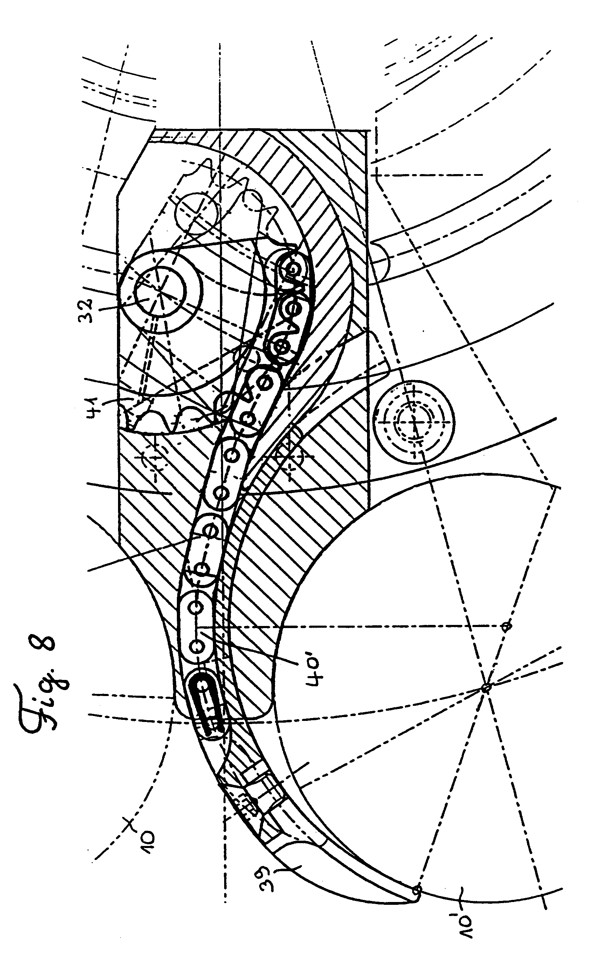

Figur 8 zeigt eine weitere Ausführungsform des Halteelementes, wobei in diesem Fall der an den Finger 39 anschliessende hintere Teil des Halteelementes von einem geführten flexiblen Element 40' gebildet wird. In Figur 8 ist dies ein Kettenstück 40', welches von einem Kettenrad 41 angetrieben wird. Das Kettenrad 41 seinerseits wird wiederum durch den Steuerflügel betätigt, wie dies anhand der vorhergehenden Ausführungsbeispiele bereits beschrieben worden ist. Anstelle des Kettenstücks 40' könnte als flexibles Element auch ein Zahnriemen oder ein Federstahl-Band, eine Feder oder ein Bowden-Zug verwendet werden. Auch dieses Halteelement weist die genannten Vorteile auf, dass beim Flaschenformatwechsel nur das Vorderteil 39 gewechselt zu werden braucht und dass die Ausfahrbewegung in der Ebene senkrecht zur Karussellachse keine Gefahr der Beschädigung der zu haltenden Flasche ergibt.

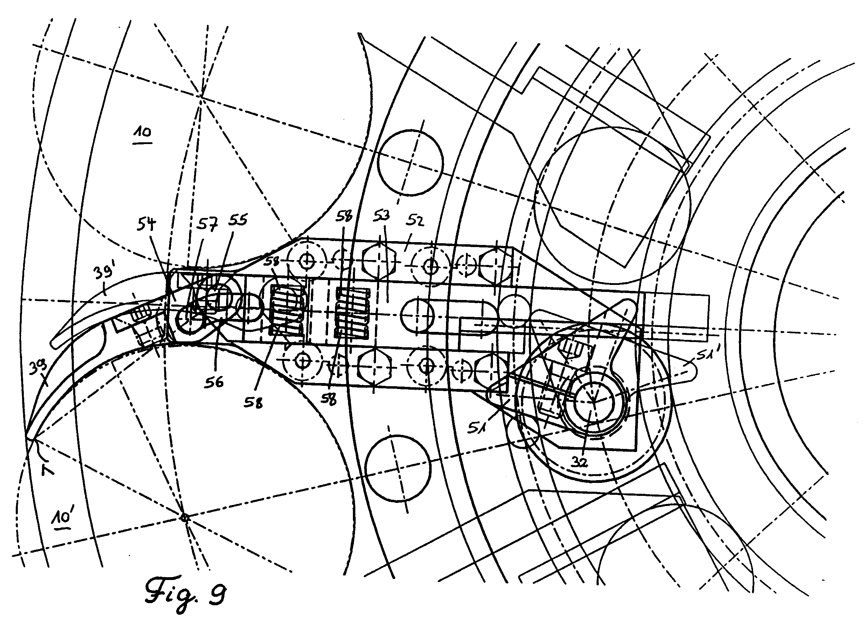

Figur 9 zeigt eine weitere Ausführungsform des Halteelementes. Dabei ist wiederum eine an der Drehachse 50 drehbar gelagerte Steuerkurve 51 bzw. 51' dargestellt, welche auf bereits beschriebene Weise durch die Steuerbolzen betätigt wird. Als Halteelement ist in diesem Fall ein entlang einer linearen Führung 52 verschiebbarer Stab 53 vorgesehen. An seinem vorderen Ende ist der Stab 53 mit einem Schwenkteil 54 versehen, an welchem schlussendlich der Finger 39 befestigt ist. Das Schwenkteil 54 ist um eine Achse 55 verschwenkbar. Das Verschwenken des Schwenkteils 54 wird aus der vom Steuerflügel bewirkten Linearbewegung der Stange 53 durch eine Steuerkurve 56 abgeleitet, in welche ein Zapfen 57 des Schwenkteils 54 eingreift. Es ergibt sich dadurch beim Ausfahren des Stabes 53 ein Schwenken des Fingers 39 um die Achse 55 derart, dass der im eingefahrenen Zustand als 39' dargestellte Finger die zu haltende Flasche 10' beim Ausfahren des Stabes 53 wieder an der Stelle T im wesentlichen punktweise berührt und dies ohne die Flasche beim Ausfahren an anderer Stelle zu berühren und somit allenfalls zu beschädigen. Um den Stab 53 in der Führung 52 mit Reibung gegen ungewollte, d.h. nicht vom Steuerflügel bewirkte Verschiebung zu sichern, können Druckfedern 58 vorgesehen sein, welche gegen die Seitenwände der Führung drücken, um Lockerheit des Stabes 53 in der Führung 52 zu verhindern. Die Federn können auch in der Führung angeordnet sein, um die bewegten Massen zu verringern. Auch bei den anderen beschriebenen Ausführungsformen können jeweils solche Dämpfungselemente vorgesehen sein, die die freie Bewegbarkeit verhindern; diese Elemente können z.B. auch auf den Steuerhebel wirken.

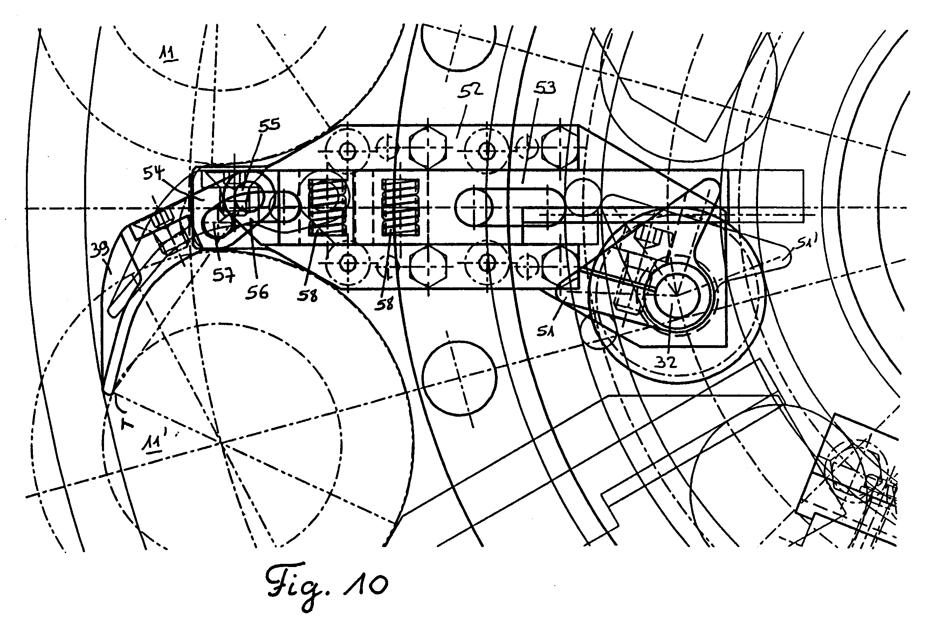

Figur 10 zeigt die selbe Ausführungsform wie in Figur 9, wobei in Figur 10 ein geändertes Fingerteil 39 am Schwenkteil 54 befestigt ist, welches geänderte Fingerteil das Halten von kleinen Flaschen 11' erlaubt.

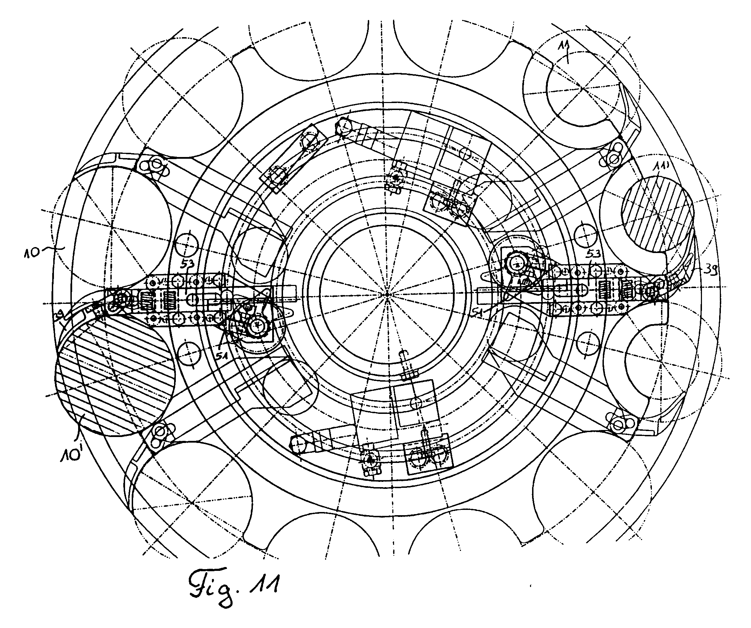

Figur 11 zeigt noch einmal eine Draufsicht auf das Karussell mit Halteelementen gemäss den Figuren 9 und 10, wobei in der linken Hälfte der Figur 11 diejenigen Halteelemente dargestellt sind, welche mit Fingern für grosse Flaschen 10 versehen sind und in der rechten Hälfte der Figur dieselben Haltelemente dargestellt sind, welche mit Fingern für kleine Flaschen 11 versehen sind. Natürlich kommen jeweils nur die einen oder die anderen Finger zur Anwendung, da das Karussell jeweils auf eine Flaschengrösse eingestellt wird. Die Figur 11 soll nur noch einmal klar aufzeigen, dass bei den erfindungsgemässen Halteelementen nur das Fingerteil 39 ausgewechselt zu werden braucht, um die Halteelemente auf die andere Flaschengrösse einzustellen.

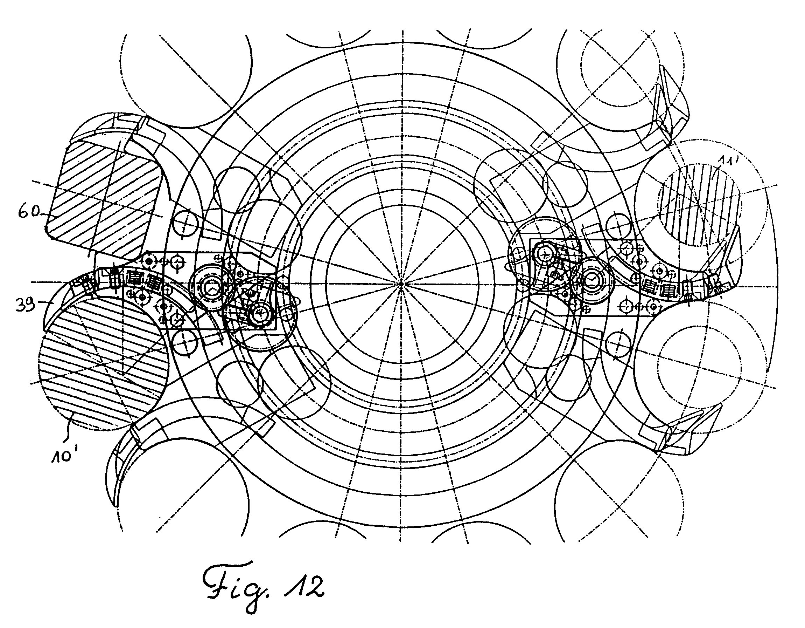

Figur 12 zeigt eine ähnliche Darstellung wie Figur 11, wobei in diesem Fall gekrümmte Halteelemente vorgesehen sind, wie sie anhand der Figuren 5 und 6 beschrieben worden sind. In diesem Fall sind auch in diesen Halteelementen Druckfedern vorgesehen, um diese in ihren Führungen klar definiert zu halten. In Figur 12 ist aber weiter auch ersichtlich, dass auch ein nicht runder Behälter 60 durch die erfindungsgemässen Halteelemente im Karussell gehalten werden kann. Die erfindungsgemässen Halteelemente bzw. das damit ausgerüstete Karussell ist also nicht auf runde Flaschen, Büchsen oder ähnliche Behälter beschränkt, sondern es können auch viereckige Flaschen, Büchsen oder andere Behälter durch die Halteelemente sicher gehalten werden. Dies gilt auch für andere z.B. dreieckige Formen.

## Patentansprüche

1. Förderkarussell mit mehreren Ausläufen und mit einer Mehrzahl von Halteelementen zum selektiven Festhalten zu fördernder Behälter, welche Halteelemente gemeinsam in mindestens einer Karussellebene angeordnet sind und zum Festhalten bzw. Loslassen des Behälters im wesentlichen eine Bewegung in dieser zur Karussellachse senkrechten Ebene ausführen, dadurch gekennzeichnet, dass jedes Halteelement (38; 40' ;53,54) ein Gleitstück und einen an diesem lösbar befestigten auswechselbaren Haltefinger (38,39') aufweist, der den vordersten Teil des Halteelementes und den behälterformatabhängigen Teil des ansonsten formatunabhängigen Halteelementes bildet, und dass das Förderkarussell weiter ein behälterformatunabhängiges Grundelement und jeweils einen formatabhängigen oberen bzw. unteren Förderstern (17,18) aufweist.

2. Förderkarussell mit mehreren Ausläufen und mit einer Mehrzahl von Halteelementen zum selektiven Festhalten zu fördernder Behälter, welche Halteelemente gemeinsam in mindestens einer Karussellebene angeordnet sind und zum Festhalten bzw. Loslassen des Behälters im wesentlichen eine Bewegung in dieser zur Karussellachse senkrechten Ebene ausführen, dadurch gekennzeichnet, dass jedes Halteelement (38;40';53,54) ein Gleitstück und einen an diesem lösbar befestigten auswechselbaren Haltefinger (38,39') aufweist, der den vordersten Teil des Halteelementes und den behälterformatabhängigen Teil des ansonsten formatunabhängigen Halteelementes bildet, und dass das Förderkarussell weiter ein behälterformatunabhängiges Grundelement, einen behälterformatunabhängigen, höhenverstellbaren oberen Förderstern (17'') und einen formatabhängigen unteren Förderstern (18) aufweist.

3. Förderkarussell nach Ansprch 1 oder 2, dadurch gekennzeichnet, dass das Halteelement den Behälter beim Festhalten im wesentlichen nur an einer Stelle berührt.

4. Förderkarussell nach Anspruch 1 oder 2, dadurch gekennzeichnet, dass das Halteelement einen in einer Führung in bezug auf die Karussellachse radial verschiebbares gerades Gleitstück (53) und einen an diesem schwenkbar angeordneten Haltefinger (39) aufweist, welcher von einer Steuerkurve (56) geführt bei der Verschiebung des Gleitstücks an den Behälter angelegt bzw. von diesem weggeführt wird.

5. Förderkarussell nach Anspruch 4, dadurch gekennzeichnet, dass das Gleitstück in der Führung mittels Reibungsdämpfern (58) gehalten ist.

6. Förderkarussell nach Anspruch 1 oder 2, dadurch gekennzeichnet, dass das Halteelement (38) ein bogenförmiges starres Gleitstück mit einem an diesem angeordneten Haltefinger (39) aufweist.

7. Förderkarussell nach Anspruch 1 oder 2, dadurch gekennzeichnet, dass das Halteelement (40') ein in einer Führung verschiebliches flexibles Gleitstück mit einem an diesem angeordneten Haltefinger aufweist.

8. Förderkarussell nach Anspruch 1 oder 2, dadurch gekennzeichnet, dass die Halteelemente jeweils von unterhalb der Karussellebene angeordneten, mit den Halteelementen gekoppelten Steuerflügeln (24,25) geöffnet oder geschlossen werden, welche Steuerflügel mit dem Karussell umlaufen und an maschinenfesten, jeweils steuerbaren oder fixen Anschlägen (22) zum Auflaufen bringbar sind und dabei eine die Halteelemente antreibende Bewegung erfahren.

9. Inspektionseinrichtung zum Prüfen von Flaschen mit einem Förderkarussell nach einem der Ansprüche 1 bis 8.

## Claims

1. Carousel conveyor with more than one outlet and with a plurality of retaining elements for selective retention of conveyed containers, said retaining elements being arranged in at least one plane of the carousel and executing a movement essentially in said plane perpendicular to the axis of the carousel in order to retain or release the container, characterized in that each retaining element (38; 40'; 53, 54) comprises a sliding part and an exchangeable retaining finger (38, 39') releasably attached thereto, which is the foremost part of the retaining element and the only component of the retaining element that is specific to the size of the containers, and in that the carousel conveyor also has a basic element that is independent of container size and an upper and a lower star-wheel (17, 18) that are both size-specific.

2. Carousel conveyor with more than one outlet and with a plurality of retaining elements for selective retention of conveyed containers, said retaining elements being arranged in at least one plane of the carousel and executing a movement essentially in said plane perpendicular to the axis of the carousel in order to retain or release the container, characterized in that each retaining element (38; 40'; 53, 54) comprises a sliding part and an exchangeable retaining finger (38, 39') releasably attached thereto, which is the foremost part of the retaining element and the only component of the retaining element that is specific to the size of the containers, and in that the carousel conveyor also has a basic element that is independent of container size, an upper star-wheel (17'') that is independent of container size and is adjustable in height, and a lower star-wheel (18) that is size-specific.

3. Carousel conveyor according to Claim 1 or Claim 2, characterized in that the retaining element contacts the retained container essentially only at one point.

4. Carousel conveyor according to Claim 1 or Claim 2, characterized in that the retaining element has a straight sliding part (53) which is radially displaceable in a guide with respect to the axis of the carousel and a retaining finger (39) pivotably arranged thereon, which is guided by a cam (56) upon displacement of the sliding part so that it contacts the container, or moves away from the container as the case may be.

5. Carousel conveyor according to Claim 4, characterized in that the sliding part is secured in the guide by means of friction dampers (58).

6. Carousel conveyor according to Claim 1 or Claim 2, characterized in that the retaining element (38) has an arc-shaped rigid sliding part with a retaining finger (39) arranged thereon.

7. Carousel conveyor according to Claim 1 or Claim 2, characterized in that the retaining element (40') has a flexible sliding part displaceable in a guide, with a retaining finger arranged thereon.

8. Carousel conveyor according to Claim 1 or Claim 2, characterized in that the retaining elements are individually opened or closed by control vanes (24, 25) which are arranged below the plane of the carousel and coupled with the retaining elements, and the said control vanes revolve with the carousel and can be shifted to strike stops (22) which may be controllable or fixed, and which are fixed with respect to the machine, thus imparting movement to the retaining elements.

9. Bottle inspection apparatus with a carousel conveyor according to any one of Claims 1 to 8.

## Revendications

1. Carrousel convoyeur comportant plusieurs sorties et une multitude d'éléments de retenue destinés à retenir de façon sélective des récipients à retenir, les éléments de retenue étant agencés en commun dans au moins un plan du carrousel et effectuant un mouvement dirigé essentiellement dans un plan perpendiculaire à l'axe du carrousel de manière à retenir ou à relâcher le récipient,
caractérisé en ce que chaque élément de retenue (38; 40'; 53, 54) comprend un élément coulisseau et un doigt de retenue (38, 39') fixé de façon remplaçable sur le coulisseau, le doigt constituant la partie d'extrémité avant de l' élément de retenue et la partie dépendant du format du récipient dans l'élément de retenue par ailleurs indépendant du format, et en ce que le carrousel convoyeur comporte d'autre part un élément de base indépendant du format des récipients, ainsi qu'une étoile de convoyeur supérieure et une étoile inférieure (17, 18) de convoyeur.

2. Carrousel convoyeur comportant plusieurs sorties et une multitude d'éléments de retenue destinés à retenir de façon sélective des récipients à retenir, les éléments de retenue étant agencés en commun dans au moins un plan du carrousel et effectuant un mouvement dirigé essentiellement dans un plan perpendiculaire à l'axe du carrousel de manière à retenir ou à relâcher le récipient,
caractérisé en ce que chaque élément de retenue (38; 40'; 53, 54) comprend un élément coulisseau et un doigt de retenue (38, 39') fixé de façon remplaçable sur le coulisseau, le doigt constituant la partie d'extrémité avant de l'élément de retenue et la partie dépendant du format du récipient dans l'élément de retenue par ailleurs indépendant du format, et en ce que le carrousel convoyeur comporte d'autre part un élément de base indépendant du format des récipients, une étoile de convoyeur supérieure (17'') indépendante du format, réglable en hauteur, ainsi qu'une étoile de convoyeur inférieure (18) dépendant du format.

3. Carrousel convoyeur selon la revendication 1 ou 2, caractérisé en ce que, pour le retenir, l'élément de retenue touche le récipient essentiellement en un seul point.

4. Carrousel convoyeur selon la revendication 1 ou 2, caractérisé en ce que l'élément de retenue comporte un élément coulisseau droit (53) pouvant être déplacé, dans un guidage, dans le sens radial par rapport à l'axe du carrousel, ainsi qu'un doigt de retenue (39) monté de façon pivotante sur cet élément, qui, lors du mouvement coulissant de l'élément coulisseau, est mis en appui sur le récipient ou en est retiré, en étant guidé par une came de commande (56).

5. Carrousel convoyeur selon la revendication 4, caractérisé en ce que l'élément coulisseau est maintenu dans le guidage par l'intermédiaire d'amortisseurs (58) à frottement.

6. Carrousel convoyeur selon la revendication 1 ou 2, caractérisé en ce que l'élément de retenue (38) comporte un élément coulisseau rigide en forme d'arc et un doigt de retenue (39) monté sur ce dernier.

7. Carrousel convoyeur selon la revendication 1 ou 2, caractérisé en ce que l'élément de retenue (40') comporte un élément coulisseau flexible coulissant dans un guidage, et un doigt de retenue monté sur celui-ci.

8. Carrousel convoyeur selon la revendication 1 ou 2, caractérisé en ce que les éléments de retenue sont ouverts et fermés par l'intermédiaire d'ailes de commande (24, 25) couplées aux éléments de retenue, situées en dessous du plan du carrousel, les ailes de commande se déplaçant en rotation simultanément avec le carrousel et pouvant être amenées en prise avec des butées (22) stationnaires de la machine, qui peuvent être soit commandées, soit fixes, et qui impriment alors aux ailes un mouvement d'entraînement des éléments de retenue.

9. Installation d'inspection pour le contrôle de bouteilles, utilisant un carrousel convoyeur selon l'une des revendications 1 à 8.
